(19) Europäisches Patentamt
European Patent Office
Office européen des brevets

(11) **EP 4 030 188 B1**

(12) **EUROPÄISCHE PATENTSCHRIFT**

(45) Veröffentlichungstag und Bekanntmachung des Hinweises auf die Patenterteilung:
**07.12.2022   Patentblatt 2022/49**

(21) Anmeldenummer: **21151747.9**

(22) Anmeldetag: **15.01.2021**

(51) Internationale Patentklassifikation (IPC):
**G01S 7/48** (2006.01)          **B25J 9/16** (2006.01)
**F16P 3/14** (2006.01)          **G01S 13/93** (2020.01)
**G01S 17/34** (2020.01)          **G01S 17/42** (2006.01)
**G01S 17/58** (2006.01)

(52) Gemeinsame Patentklassifikation (CPC):
**G01S 7/4802; B25J 9/1676; F16P 3/144;**
**F16P 3/147; G01S 13/93; G01S 17/34;**
**G01S 17/42; G01S 17/58;** G05B 2219/40202;
G05B 2219/40203

(54) **VORRICHTUNG UND VERFAHREN ZUM ABSICHERN EINES ÜBERWACHUNGSBEREICHES**

DEVICE AND METHOD FOR SECURING A SURVEILLANCE AREA

DISPOSITIF ET PROCÉDÉ DE SÉCURISATION D'UNE ZONE DE SURVEILLANCE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(43) Veröffentlichungstag der Anmeldung:
**20.07.2022   Patentblatt 2022/29**

(73) Patentinhaber: **SICK AG**
**79183 Waldkirch (DE)**

(72) Erfinder: **Ruh, Dominic**
**79102 Freiburg (DE)**

(56) Entgegenhaltungen:
**DE-A1-102018 125 736     US-A1- 2019 317 219**

**Beschreibung**

Die Erfindung betrifft ein System und ein Verfahren zum Absichern eines Überwachungsbereiches nach dem Oberbegriff von Anspruch 1 beziehungsweise Anspruch 11.

Das primäre Ziel der Sicherheitstechnik ist, Personen vor Gefahrenquellen zu schützen, wie sie beispielsweise Maschinen im industriellen Umfeld darstellen. Die Maschine wird mit Hilfe von Sensoren überwacht, und wenn demnach eine Situation vorliegt, in der eine Person gefährlich nahe an die Maschine zu gelangen droht, wird eine geeignete Absicherungsmaßnahme ergriffen.

Häufig werden optoelektronische Sensoren wie Laserscanner oder 3D-Kameras für eine sicherheitstechnische Überwachung eingesetzt. In der Sicherheitstechnik eingesetzte Sensoren müssen besonders zuverlässig arbeiten und deshalb hohe Sicherheitsanforderungen erfüllen, beispielsweise die Norm EN13849 für Maschinensicherheit und die Gerätenorm IEC61496 oder EN61496 für berührungslos wirkende Schutzeinrichtungen (BWS). Zur Erfüllung dieser Sicherheitsnormen sind eine Reihe von Maßnahmen zu treffen, wie sichere elektronische Auswertung durch redundante, diversitäre Elektronik, Funktionsüberwachung oder spezielle Überwachung der Verschmutzung optischer Bauteile.

In der DE 10 2007 007 576 A1 wird eine Maschine dadurch abgesichert, dass eine Vielzahl von Laserscannern ein dreidimensionales Bild ihres Arbeitsraums aufnehmen und diesen Ist-Zustand mit einem Soll-Zustand vergleichen. Die Laserscanner werden am Rand des Arbeitsraums auf Stativen in unterschiedlicher Höhe positioniert. Anstelle von Laserscannern können auch 3D-Kameras verwendet werden.

Aus der DE 198 43 602 A1 ist ein Verfahren und eine Vorrichtung zum Erfassen der Bewegungen von Prozesseinheiten während eines Produktionsprozesses in einem vorgegebenen Auswertebereich bekannt. Mindestens zwei ortsfest im Auswertebereich angeordnete Kameras kommen zur Anwendung. Es werden kontinuierlich Ortskoordinaten jeder Prozesseinheit erfasst und zu jeder Ortskoordinate ein die Bewegung der jeweiligen Prozesseinheit beschreibender Translationsvektor ermittelt.

Die US 9 804 576 B2 offenbart eine erkennungsbasierte, industrielle Automatisierungssteuerung, die dazu eingerichtet ist, Personenbewegungen zu erkennen, für die Zukunft abzuleiten und mit geplanten Automatisierungsbefehlen abzugleichen, um gegebenenfalls weitere sicherheitsgerichtete Aktionen (Alarme oder geänderte Steuerungsbefehle) abzuleiten, wobei zur Erkennung der Personenbewegungen 3D Kameras verwendet werden.

Die DE 10 2006 048 163 B4 beschreibt eine kamerabasierte Überwachung bewegter Maschinen und/oder beweglicher Maschinenelemente zur Kollisionsverhinderung, wobei mit Hilfe eines Bilderfassungssystems Bilddaten der Maschine und/oder der beweglichen Maschinenelemente erfasst werden. Bei dem Bilderfassungssystem kann es sich insbesondere um ein multiokulares Kamerasystem handeln, weiterhin werden als mögliche Bilderfassungssysteme LiDAR-, RADAR- oder Ultraschallsensoren genannt.

Die im Stand der Technik üblicherweise zur Objekt- und/oder Personendetektion verwendeten Bilderfassungssysteme, insbesondere Laserscanner und Kamerasysteme, weisen jedoch Nachteile auf, auf die im Folgenden näher eingegangen werden soll.

Laserscanner oder LiDAR (Light Detection And Ranging) - Sensoren basieren meist auf einer direkten Lichtlaufzeitmessung. Hierbei wird ein Lichtpuls vom Sensor ausgesandt, an einem Objekt reflektiert und wieder vom Sensor detektiert. Die Laufzeit des Lichtpulses wird vom Sensor bestimmt und über die Lichtgeschwindigkeit im Propagationsmedium (in der Regel Luft) die Entfernung zwischen Sensor und Objekt geschätzt. Da die Phase der elektromagnetischen Welle hierbei nicht berücksichtigt wird, spricht man von einem inkohärenten Messprinzip. Bei einer inkohärenten Messung besteht die Notwendigkeit, Pulse aus vielen Photonen aufzubauen, um den reflektierten Puls mit ausreichendem Signal-Rausch-Verhältnis zu empfangen. Die Anzahl der Photonen innerhalb eines Pulses ist im industriellen Umfeld in der Regel durch den Augenschutz nach oben limitiert. In der Folge ergeben sich Abwägungen zwischen maximaler Reichweite, minimaler Remission des Objektes, Integrationszeit und den Anforderungen an das Signal-Rausch-Verhältnis des Sensorsystems. Inkohärente Strahlung bei gleicher Wellenlänge (Umgebungslicht) wirkt sich zudem direkt auf den dynamischen Bereich des Lichtempfängers aus. Beispiele für inkohärente Strahlung bei gleicher Wellenlänge sind die Sonne, ähnliche Sensorsysteme, oder das identische Sensorsystem über eine Mehrwegeausbreitung, also unerwünschte Reflexionen.

Aus dem Stand der Technik bekannte Kamerasysteme basieren auf Messprinzipien wie beispielsweise der Stereoskopie oder der indirekten Lichtlaufzeitmessung. Bei der indirekten Lichtlaufzeitmessung wird die Phasendifferenz eines AMCW (Amplitude Modulated Continous Wave)-Sendesignals und dessen zeitlich verzögerter Kopie nach Reflexion mit einem Objekt bestimmt. Die Phasendifferenz entspricht der Lichtlaufzeit und kann über die Lichtgeschwindigkeit im Propagationsmedium in einen Distanzwert umgerechnet werden. Sowohl die Stereoskopie als auch die indirekte Lichtlaufzeitmessung sind ebenfalls inkohärente Messverfahren mit den oben genannten Nachteilen.

Millimeterwellenlängen Radarsensoren basieren auf einem frequenz-modulierten-Dauerstrich-Messprinzip (FMCW) und können unter Ausnutzung des Dopplereffekts auch Radialgeschwindigkeiten eines erfassten Objekts bestimmen. Der größte Nachteil von millimeterwellenlängen Radarsensoren im Vergleich zu optischen Technologien ist die deutlich größere Wellenlänge und die damit geringere räumliche Auflösung. Darüber hinaus beschränken regulatorische Bestimmungen die radiale Auflösung durch Beschränkung der Bandbreite und in einem MIMO (Multiple Input Multiple Output) - Radarsystem die Anzahl an verfügbaren virtuellen Antennen (Produkt aus der Anzahl der Sende- und Empfangsantennen) die Winkelauflösung. Geometrische physikalische Merkmale sind daher im Vergleich zu optischen Technologien bei der sicherheitsgerichteten Objekt- und/oder Personendetektion kaum nutzbar.

Die US 2019 / 317 219 offenbart ein Verfahren zur Kontrolle eines autonomen Fahrzeugs auf Basis von Lagen und/oder Klassifizierungen von Objekten in der Umgebung des Fahrzeugs. Die Lagen und/oder die Klassifizierungen der Objekte können auf Grundlage von Daten eines frequenzmodulierten (FMCW) Dauerstrich-LIDAR-Sensors bestimmt werden.

Aus der DE 10 2018 125736 A1 ist ein Verfahren zum Schutz von Menschen in einer Umgebung einer beweglichen Maschine, insbesondere im Rahmen einer Mensch-Roboter-Kollaboration, bekannt, welches umfasst, dass die Umgebung mittels einer Schutzeinrichtung überwacht wird, die dazu ausgebildet ist, einen oder mehrere kinematische Parameter eines jeweiligen in der Umgebung befindlichen Objekts zu erfassen und die bewegliche Maschine in Abhängigkeit von erfassten kinematischen Parametern des jeweiligen Objekts zu einer Schutzmaßnahme anzusteuern.

Es ist daher Aufgabe der Erfindung, eine Vorrichtung zum Absichern eines Überwachungsbereiches mit einem optoelektronischen Sensor zu verbessern.

Diese Aufgabe wird durch eine Vorrichtung und ein Verfahren zum Absichern eines Überwachungsbereiches nach Anspruch 1 beziehungsweise 11 gelöst.

Die erfindungsgemäße Vorrichtung zum Absichern eines Überwachungsbereiches weist wenigstens einen optoelektronischen Sensor auf, der an einer Maschine oder ortsfest angeordnet sein kann.

Erfindungsgemäß ist der optoelektronische Sensor als frequenz-modulierter-Dauerstrich (Frequency Modulated Continuous Wave, FMCW) - LiDAR-Sensor ausgebildet. Grundlagen der FMCW-LiDAR Technologie sind beispielsweise in der wissenschaftlichen Veröffentlichung "Linear FMCW Laser Radar for Precision Range and Vector Velocity Measurements" (Pierrottet, D., Amzajerdian, F., Petway, L., Barnes, B., Lockard, G., & Rubio, M. (2008). Linear FMCW Laser Radar for Precision Range and Vector Velocity Measurements. MRS Proceedings, 1076, 1076-K04-06. doi:10.1557/PROC-1076-K04-06) oder der Doktorarbeit "Realization of Integrated Coherent LiDAR" (T. Kim, University of California, Berkeley, 2019. https://escholarship.org/uc/item/1d67v62p) beschrieben.

Im Gegensatz zu einem auf Lichtlaufzeitmessung von Laserpulsen basierenden LiDAR-Sensor sendet ein FMCW-LiDAR-Sensor keine gepulsten, sondern kontinuierliche Sendelichtstrahlen in den Überwachungsbereich aus, die während einer Messung, also einer zeitdiskreten Abtastung eines Messpunktes im Überwachungsbereich, eine vorgegebene Frequenzmodulation, das heißt eine zeitliche Änderung der Wellenlänge des Sendelichts, aufweisen. Die Messfrequenz liegt dabei typischerweise im Bereich von 10 bis 30 Hz. Die Frequenzmodulation kann beispielsweise als periodische Auf- und Abwärtsmodulation ausgebildet sein. Von Messpunkten im Überwachungsbereich reflektiertes Sendelicht weist im Vergleich zum ausgestrahlten Sendelicht einen Zeitversatz entsprechend der Lichtlaufzeit auf, die von der Entfernung des Messpunktes vom Sensor abhängt und aufgrund der Frequenzmodulation mit einer Frequenzverschiebung einhergeht. Im FMCW-LiDAR-Sensor werden ausgestrahltes und reflektiertes Sendelicht kohärent überlagert, wobei aus dem Überlagerungssignal die Entfernung des Messpunktes vom Sensor bestimmt werden kann. Das Messprinzip der kohärenten Überlagerung hat im Vergleich zu gepulsten oder amplituden-modulierten inkohärenten LiDAR Messprinzipien unter anderem den Vorteil einer erhöhten Immunität bezüglich Fremdlicht von beispielsweise anderen optischen Sensoren/Sensorsysteme oder der Sonne. Gegenüber Radarsensoren mit Wellenlängen im Bereich von Millimetern verbessert sich die Ortsauflösung, wodurch geometrische Eigenschaften einer Person messbar werden.

Bewegt sich ein Messpunkt mit einer Radialgeschwindigkeit auf den Sensor zu oder vom Sensor weg, weist das reflektierte Sendelicht zusätzlich eine Dopplerverschiebung auf. Diese Veränderung der Sendelichtfrequenz kann ein FMCW-LiDAR-Sensor bestimmen und daraus die Entfernung und die Radialgeschwindigkeit eines Messpunkts in einer einzigen Messung, also einer einmaligen Abtastung eines Messpunktes, bestimmen, während bei einem auf Lichtlaufzeitmessung von Laserpulsen basierenden LiDAR-Sensor für eine Bestimmung der Radialgeschwindigkeit wenigstens zwei Messungen, also zwei zeitlich beabstandete Abtastungen des gleichen Messpunktes, nötig sind.

Bei zeit- und raumdiskreter Abtastung eines dreidimensionalen Überwachungsbereichs kann ein FMCW-LiDAR-Sensor folgende Messdaten erfassen:

$$M_{j,k,l} = \begin{pmatrix} r_{j,k,l} \\ v^r_{j,k,l} \\ I_{j,k,l} \end{pmatrix}.$$

Hierbei bezeichnen $r_{j,k,l}$ den Radialabstand, $v^r_{j,k,l}$ die Radialgeschwindigkeit und $I_{j,k,l}$ die Intensität jedes raumdiskreten Messpunktes $j,\ k$ mit zweidimensionaler, durch Azimutwinkel $\varphi$ und Polarwinkel $\theta$ angegebener Position $(\varphi_j, \theta_k)$ für jede zeitdiskrete Abtastung $l$. Zur einfachen Lesbarkeit wird im Folgenden der Index $n$ für eine einmalige zeitdiskrete Abtastung eines raumdiskreten, zweidimensionalen Messpunkts $(\varphi_j, \theta_k)$ im dreidimensionalen Überwachungsbereich verwendet.

Zur Auswertung der vom FMCW-LiDAR-Sensor erfassten Messdaten und zum Auslösen einer sicherheitsgerichteten Aktion basierend auf der Auswertung weist die erfindungsgemäße Vorrichtung eine Steuer- und Auswerteeinheit auf, die dazu ausgebildet ist, die Messpunkte unter Verwendung der ortsaufgelösten Radialgeschwindigkeit der Messpunkte zu segmentieren und zu Objekten und/oder Objektsegmenten zusammenzufassen. Als Objektsegmente sind dabei einzeln bewegliche Teile eines aus mehreren Teilen bestehenden Objektes zu verstehen, beispielsweise die Gliedmaßen eines menschlichen Körpers oder die Komponenten eines Roboterarms.

Die Erfindung hat den Vorteil, dass durch die Verwendung der ortsaufgelösten Radialgeschwindigkeit als zusätzlichem Parameter eine verbesserte Segmentierung der Messdaten möglich ist. Diese gilt insbesondere auch für bekannte Segmentierungsverfahren der digitalen Bildverarbeitung oder des maschinellen Sehens.

Die Steuer- und Auswerteeinheit kann weiterhin dazu ausgebildet sein, Radialgeschwindigkeiten der Objekte und/oder Objektsegmente zu bestimmen und Merkmale der Objekte und/oder Objektsegmente zu extrahieren, die auf den Radialgeschwindigkeiten der Objektsegmente basieren. Bei den extrahierten Merkmalen kann es sich beispielsweise um statistische Maße wie Mittelwert oder Standardabweichung, um höhere Momente, oder Histogramme der Radialgeschwindigkeiten der Objekte und/oder Objektsegmente handeln, die charakteristisch für eine Objekt- und/oder Objektsegmentbewegung sein können.

Vorteilhafterweise kann die Steuer- und Auswerteeinheit dazu ausgebildet sein, die auf den Radialgeschwindigkeiten der Objekte und/oder Objektsegmente basierenden Merkmale zu einer Klassifizierung der Objekte und/oder Objektsegmente zu verwenden. Durch diese zusätzlichen Merkmale ist eine verbesserte Klassifizierung der Objekte und/oder der Objektsegmente möglich.

In einer Ausführungsform kann die Steuer- und Auswerteeinheit dazu ausgebildet sein, die Messdaten unter Verwendung der Radialgeschwindigkeiten der Messpunkte zu filtern. Somit kann bereits vor einer Segmentierung der Messpunkte der Rechenaufwand durch Datenreduktion vermindert werden. Eine Filterung kann beispielsweise dadurch erfolgen, dass Messpunkte mit einer Radialgeschwindigkeit kleiner, größer oder gleich einem vorgegebenen Schwellenwert verworfen und keiner weiteren Auswertung zugeführt werden. Beispielsweise können im Falle einer Antikollisionsfunktion Objekte und/oder Objektsegmente, die sich mit dem Sensor bewegen ($v^r = 0$) oder sich vom Sensor entfernen ($v^r > 0$), verworfen werden.

Der FMCW-LiDAR-Sensor kann stationär angeordnet sein und einen vorgegebenen Überwachungsbereich abtasten. Vorzugsweise kann wenigstens ein weiterer FMCW-LiDAR-Sensor vorgesehen sein, der einen weiteren Überwachungsbereich abtastet, wobei sich die Überwachungsbereiche überlappen können. Dadurch können Abschattungen oder tote Winkel, in denen keine Objekterfassung möglich ist, vermieden werden. Werden zwei FMCW-LiDAR Sensoren orthogonal zueinander angeordnet, kann der eine FMCW-LiDAR Sensor die Tangentialkomponente des Geschwindigkeitsvektors eines Objekts des anderen FMCW-LiDAR Sensors bestimmen.

Der FMCW-LiDAR-Sensor kann an einer Maschine angeordnet sein, insbesondere an einem führerlosen Fahrzeug (automated guided vehicle, AGV) oder an einem Roboter. Der Roboter kann sich als Ganzes in Bewegung befinden (mobile robot) oder Bewegungen mittels verschiedener Achsen und Gelenke durchführen. Der Sensor kann dann Bewegungen der Maschine mit vollführen und einen veränderlichen Überwachungsbereich abtasten.

Der Sensor ist vorzugsweise sicher im Sinne der einleitend genannten oder vergleichbarer Normen. Die Steuer- und Auswertungseinheit kann in den Sensor integriert oder daran angeschlossen sein, etwa in Form einer Sicherheitssteuerung oder einer übergeordneten Steuerung, die auch mit der Maschinensteuerung kommuniziert. Zumindest Teile der Funktionalität können auch in einem Remote-System oder einer Cloud implementiert sein.

Der Sensor kann vorzugsweise an oder in der Nähe von einem gefahrbringenden Maschinenteil angebracht, wie etwa einer Werkzeugspitze. Wenn es sich beispielsweise um einen Roboter mit vielen Achsen handelt, ist für den Sensor deren Zusammenspiel nicht relevant, da der Sensor einfach die resultierende Bewegung am Ort der Gefahr nachvollzieht.

In einer Weiterbildung der Erfindung können mehrere optoelektronische Sensoren an der Maschine angebracht sein, um die Bewegung von beweglichen Teilen der Maschine zu bestimmen. Damit lassen sich auch komplexe Maschinen überwachen, bei denen eine punktuelle Bestimmung der Bewegung nicht ausreicht. Ein Beispiel ist ein Roboter mit mehreren Roboterarmen und eventuell Gelenken. Mindestens ein stationärer, also nicht mit der Maschine mitbewegter optoelektronischer Sensor, kann die Maschine zusätzlich beobachten.

Das erfindungsgemäße Verfahren kann auf ähnliche Weise weitergebildet werden und zeigt dabei ähnliche Vorteile. Derartige vorteilhafte Merkmale sind beispielhaft, aber nicht abschließend in den sich an die unabhängigen Ansprüche anschließenden Unteransprüchen beschrieben.

Die Erfindung wird nachstehend auch hinsichtlich weiterer Merkmale und Vorteile beispielhaft anhand von Ausführungsformen und unter Bezug auf die beigefügte Zeichnung näher erläutert. Die Abbildungen der Zeichnung zeigen in:

Fig. 1    eine schematische Darstellung einer erfindungsgemäßen Vorrichtung mit einem stationär angeordneten FMCW-LiDAR-Sensor;

Fig. 2     ein Beispiel für eine Radialgeschwindigkeitsmessung mit einem FMCW-Li-DAR-Sensor;

Fig. 3     ein Ablaufdiagramm für eine beispielhafte erfindungsgemäße Verarbeitung von Messdaten eines FMCW-LiDAR-Sensors;

Fig. 4     ein beispielhaftes Ablaufdiagramm zur Überwachung einer Bewegung eines Roboters unter Verwendung eines erfindungsgemäßen Verfahrens;

Fig. 5     ein beispielhaftes Ablaufdiagramm zur Kollisionsvermeidung unter Verwendung eines erfindungsgemäßen Verfahrens;

Fig. 6     ein beispielhaftes Ablaufdiagramm zur Personenidentifikation unter Verwendung eines erfindungsgemäßen Verfahrens;

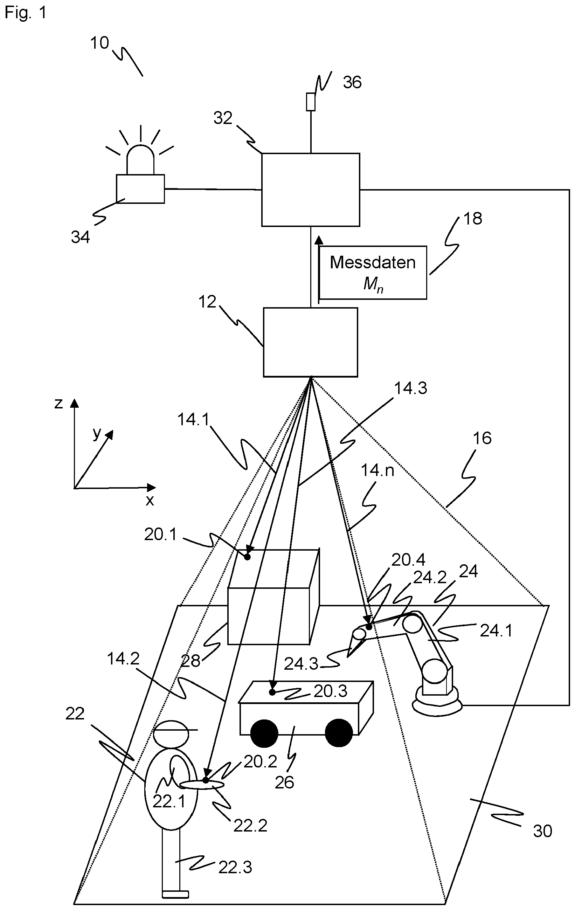

Figur 1 zeigt eine schematische Darstellung einer erfindungsgemäßen Vorrichtung 10 mit einem stationär angeordneten FMCW-LiDAR-Sensor 12. Der FMCW-LiDAR-Sensor 12 sendet Sendelichtstrahlen 14.1, ..., 14.n in einen dreidimensionalen Überwachungsbereich 16 aus und erzeugt Messdaten $M_n$ 18 aus von Messpunkten 20.1, ..., 20.n im Überwachungsbereich 16 zurück zum FMCW-LiDAR-Sensor 12 reflektiertem oder remittiertem Sendelicht. Zur Darstellung ist eine begrenzte Zahl beispielhafter Sendelichtstrahlen 14.1, ..., 14.n und Messpunkte 20.1, ..., 20.n gezeigt, die tatsächliche Anzahl ergibt sich durch die Größe des Überwachungsbereichs 16 und die räumliche Auflösung der Abtastung. Die Messpunkte 20.1, ..., 20.n können im Überwachungsbereich 16 befindliche Personen 22, Maschinen, beispielsweise Roboter 24 oder führerlose Fahrzeuge (automated guided vehicles, AGV) 26, statische Objekte wie Kisten 28, oder auch Grenzen des Überwachungsbereichs wie Böden 30 oder Wände repräsentieren.

Die von der Steuer- und Auswerteeinheit 32 empfangenen Messdaten $M_n$ 18 des FMCW-LiDAR-Sensors 12 umfassen für jede zeitdiskrete Abtastung neben den Radialabständen $r_n$ und den Intensitäten $I_n$, also der remittierten oder reflektierten Sendelichtmenge, insbesondere die Radialgeschwindigkeiten $v^r_n$ der Messpunkte 20.1, ..., 20.n, wobei mit Radialgeschwindigkeit $v^r_n$ die Geschwindigkeitskomponente eines Messpunkts 20.1, ..., 20.n bezeichnet wird, mit der sich der Messpunkt 20.1, ..., 20.n auf den FMCW-LiDAR-Sensor 12 zu oder vom FMCW-LiDAR-Sensor 12 weg bewegt.

Die Messdaten $M_n$ 18 werden von einer Steuer- und Auswerteeinheit 32 ausgewertet, wobei die Steuer- und Auswerteeinheit 32 dazu eingerichtet ist, basierend auf der Auswertung ein sicherheitsgerichtetes Signal zum Auslösen einer sicherheitsgerichteten Aktion zu erzeugen. Bei der sicherheitsgerichteten Aktion kann es sich beispielsweise um die Aktivierung einer Warnleuchte 34 oder das Stoppen des Roboters 24 handeln. Im Ausführungsbeispiel ist die Steuer- und Auswerteeinheit 32 direkt mit der Warnleuchte 34 und dem Roboter 24 verbunden, löst also die sicherheitsgerichtete Aktion selbst aus. Alternativ kann die Steuer- und Auswerteeinheit 32 ein sicherheitsgerichtetes Signal über eine Schnittstelle 36 an eine übergeordnete Sicherheitssteuerung (nicht gezeigt) weitergeben, oder die Steuer- und Auswerteeinheit 32 kann selbst Teil einer Sicherheitssteuerung sein.

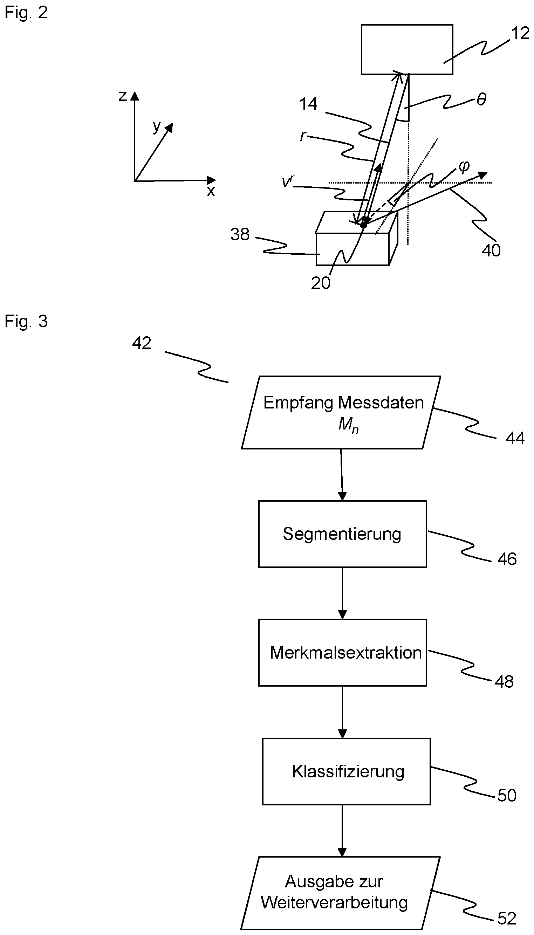

In Figur 2 ist das Konzept der Radialgeschwindigkeitsmessung an einem dreidimensionalen Beispiel gezeigt. Bewegt sich ein Objekt 38 entlang einer Bewegungsrichtung 40 relativ zum FMCW-LiDAR-Sensor 12, kann der FMCW-LiDAR-Sensor 12 neben dem Radialabstand r und der Intensität I eines mit einem Sendelichtstrahl 14 unter einem Azimuthwinkel φ und einem Polarwinkel θ einmalig zeitdiskret abgetasteten Messpunkts 20 die Radialgeschwindigkeit $v^r$ des Messpunkts 20 des Objekts 38 in Richtung des FMCW-LiDAR-Sensors 12 bestimmen. Diese Information steht direkt mit einer Messung, also einer zeitdiskreten Abtastung des Messpunktes 20 zur Verfügung. Zur Identifikation bewegter Objekte entfällt somit im Unterschied zu Messverfahren, die lediglich ortsaufgelöste Radialabstände, also dreidimensionale Positionen, liefern, die Notwendigkeit einer zweiten Messung und insbesondere die Notwendigkeit, in den Messdaten der zweiten Messung zunächst die Messpunkte zu ermitteln, die den Messpunkten der ersten Messung entsprechen.

Jeder Messpunkt mit einer Radialgeschwindigkeit von Null ist in der Regel einem statischen Objekt zugeordnet. Aufgrund der endlichen Objektausdehnung und der hohen räumlichen Auflösung des FMCW-LiDAR-Sensors wird praktisch jedes bewegte Objekt im Überwachungsbereich 16 wenigstens einen Messpunkt 20.1, ..., 20.n mit einer von Null verschiedenen Radialgeschwindigkeit $v^r_n$ zum FMCW-LiDAR-Sensor 12 aufweisen. Daher lassen sich bereits mit einer Messung des FMCW-LiDAR-Sensors 12 statische und bewegte beziehungsweise in mobilen Applikationen sich entfernende oder nähernde Objekte unterscheiden. So können beispielswise bei einer Antikollisionsüberwachung sich entfernende Messpunkte respektive sich entfernende Objekte verworfen werden. Durch eine entsprechende Datenreduktion werden Rechenaufwände bei der weiteren Auswertung der Messdaten $M_n$ 18 reduziert.

Figur 3 zeigt in einem Ablaufdiagramm 42 eine beispielhafte erfindungsgemäße Weiterverarbeitung der vom FMCW-LiDAR-Sensor erfassten Messdaten $M_n$ durch die Steuer-und Auswerteeinheit. Nach dem Empfang 44 der Messdaten $M_n$ werden in einem Segmentierungsschritt 46 die Messpunkte 20.1, ..., 20.n segmentiert und zu Objekten 22, 24, 26, 28, 30 und/oder Objektsegmenten 22.1, 22.2, 22.3, 24.1, 24.2, 24.3 zusammengefasst, wobei zusätzlich zu den üblicherweise zur Segmentierung 46 verwendeten Ortskoordinaten und Intensitäten der Messpunkte 20.1, ..., 20.n, die ortsaufgelös-

ten Radialgeschwindigkeiten $v^r_n$ der Messpunkte 20.1, ..., 20.n berücksichtigt werden. Objektsegmente können beispielsweise einzelne bewegliche Komponenten 24.1, 24.2, 24.3 eines Roboters 24 oder Körperteile 22.1, 22.2, 22.3 einer Person 22 sein.

Die Segmentierung 46 kann nach bekannten Verfahren der digitalen Bildverarbeitung beziehungsweise des maschinellen Sehens erfolgen, wie beispielsweise

- Pixelorientierte Verfahren im Grauwertbild mittels Schwellenwert-Verfahren,
- Kantenorientierten Verfahren wie dem Sobel- oder Laplace-Operator und einer Gradientensuche,
- Regionenorientierte Verfahren wie "Region-Growing", "Region-Splitting", "Pyramid Linking" oder "Split and Merge",
- Modellbasierte Verfahren wie bspw. die Hough-Transformation, oder
- Texturorientierte Verfahren.

Weiterhin sind unter dem Begriff "Range segmentation" spezielle Verfahren zur Segmentierung von dreidimensionalen Datensätzen bekannt. Die "Range segmentation" ist beispielsweise in den folgenden wissenschaftlichen Veröffentlichungen beschrieben:

- "Fast Range Image-Based Segmentation of Sparse 3D Laser Scans for Online Operation" (Bogoslavskyi et al., 2016 IEEE/RSJ International Conference on Intelligent Robots and Systems, DOI: 10.1109/IROS.2016.7759050)
- "Laser-based segment classification using a mixture of bag-of-words". (Behley et al., 2013 IEEE/RSJ International Conference on Intelligent Robots and Systems, DOI: 10.1109/IROS.2013.6696957)
- "On the segmentation of 3d lidar point clouds" (Douillard et al., 2011 IEEE International Conference on Robotics and Automation, DOI: 10.1109/ICRA.2011.5979818)

Durch die Verwendung der Radialgeschwindigkeit $v^r_n$ zusätzlich zum Radialabstand $r_n$ und der Intensität $l_n$ der Messpunkte 20.1, ..., 20.n kann die Segmentierung 46 der Messpunkte 20.1, ..., 20.n mit den oben aufgeführten Verfahren effizienter und genauer erfolgen. Beispielsweise können Messpunkte 20.1, ..., 20.n mit Radialgeschwindigkeiten $v^r_n$ kleiner, größer oder gleich einem vorgegebenen Schwellenwert verworfen und keiner weiteren Auswertung zugeführt werden. Im Falle einer Antikollisionsfunktion können beispielsweise Messpunkte eines Objekts und/oder Objektsegments, die sich mit dem Sensor bewegen ($v^r = 0$) oder sich vom Sensor entfernen ($v^r > 0$), verworfen werden. Wird ein Objekt und/oder Objektsegment durch mehrere raumdiskrete Messpunkte abgetastet und sind die dazugehörigen Radialgeschwindigkeiten unterscheidbar, können statische und dynamische Objekte und/oder Objektsegmente unterschieden werden und so stationäre Objekte und/oder Objektsegmente wie Kisten 28, Böden 30 oder Wände bereits vor beziehungsweise während der Segmentierung 46 der Messpunkte 20.1, ..., 20.n verworfen und der Rechenaufwand durch Datenreduktion vermindert werden.

Im nächsten Schritt erfolgt eine Merkmalsextraktion 48 der während der Segmentierung 46 definierten Objekte 22, 24, 26, 28, 30 und/oder Objektsegmente 22.1, 22.2, 22.3, 24.1, 24.2, 24.3. Typische Merkmale, die bei der Verarbeitung der Messdaten aus den Objekten 22, 24, 26, 28, 30 und/oder Objektsegmenten 22.1, 22.2, 22.3, 24.1, 24.2, 24.3 extrahiert werden können, sind beispielsweise Breite, Anzahl der Messpunkte oder Länge des Umfangs der Objekte und/oder Objektsegmente, oder weitere Merkmale, wie sie beispielsweise in der wissenschaftlichen Veröffentlichung "A Layered Approach to People Detection in 3D Range Data" (Spinello et al., Proceedings of the Twenty-Fourth AAAI Conference on Artificial Intelligence, AAAI 2010) beschrieben sind. Erfindungsgemäß können diese Merkmale um Merkmale, die auf den Radialgeschwindigkeiten der Objekte 22, 24, 26, 28, 30 und/oder Objektsegmente 22.1, 22.2, 22.3, 24.1, 24.2, 24.3 basieren, erweitert werden. Dazu werden zunächst Radialgeschwindigkeiten der Objekte und/oder Objektsegmente bestimmt, beispielsweise durch Anwendung trigonometrischer Funktionen auf die Radialgeschwindigkeiten der das jeweilige Objekt und/oder Objektsegment repräsentierenden Messpunkte. Als zusätzliche Objekt- und/oder Objektsegmentmerkmale können dann beispielsweise statistische Maße der Radialgeschwindigkeiten der Objekte und/oder Objektsegmente wie Mittelwert, Standardabweichung, höhere Momente oder Histogramme, welche charakteristisch für eine Roboter-und/oder Personenbewegungen sind, verwendet werden.

Nach der Merkmalsextraktion 48 erfolgt eine Klassifizierung 50 der Objekte 22, 24, 26, 28, 30 und/oder Objektsegmente 22.1, 22.2, 22.3, 24.1, 24.2, 24.3 mit bekannten Klassifizierungsverfahren wie beispielsweise Bayes-Klassifikatoren, Support Vector Machines oder künstlichen neuronalen Netzen. Im Rahmen der Klassifizierung wird der Merkmalsraum nach Gruppen von Merkmalen durchsucht, die ein Objekt definieren. Hierbei können die oben aufgeführten statistischen Maße der Radialgeschwindigkeit einzelner Objekte 22, 24, 26, 28, 30 und/oder Objektsegmente 22.1, 22.2, 22.3, 24.1, 24.2, 24.3 in Kombination mit a priori Informationen verwendet werden, um Merkmalsräume zu definieren, die beispielsweise Personen 22 und AGVs 26 aufgrund ihrer Radialgeschwindigkeit klassifizieren und somit unterscheiden können.

Das Ergebnis der Klassifizierung 50 kann nach der Ausgabe 52 von der Steuer-und Auswerteeinheit 32 zur Erzeugung eines sicherheitsgerichteten Signals weiterverarbeitet werden oder über die Schnittstelle 36 an eine übergeordnete Steuerung (nicht gezeigt) weitergegeben werden.

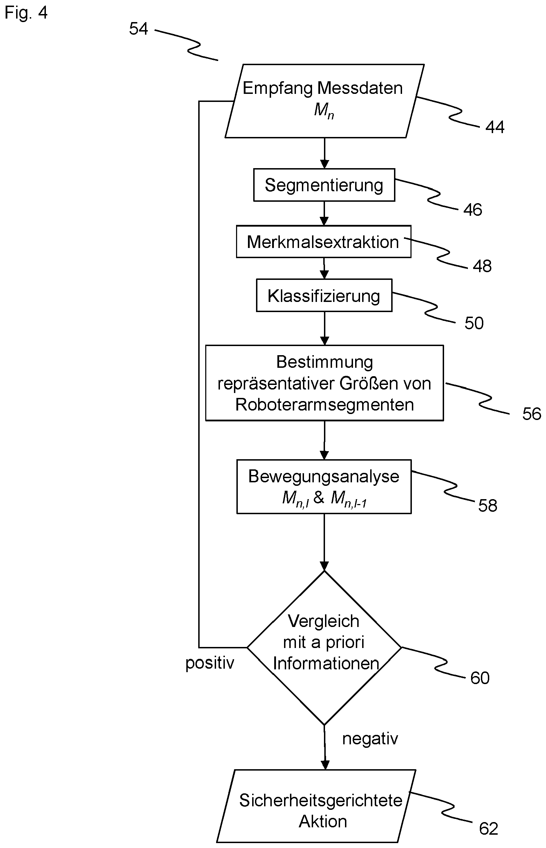

Figur 4 zeigt ein beispielhaftes Ablaufdiagramm 54 zur Überwachung einer Bewegung eines Roboters unter Verwendung eines erfindungsgemäßen Verfahrens. Nach Empfang 44 der Messdaten $M_n$ erfolgen wie oben beschrieben die Schritte Segmentierung 46 der Messdaten $M_n$, Merkmalsextraktion 48 und Klassifizierung 50. Für bei der Klassifizierung 50 identifizierte Segmente 24.1, 24.2, 24.3 des Roboterarms erfolgt eine Bestimmung 56 repräsentativer Größen wie Radialabstände, Intensitäten und Radialgeschwindigkeiten der Segmente 24.1, 24.2, 24.3. Mit Algorithmen zur Berechnung eines "Rigid Scene Flow" erfolgt eine Bewegungsanalyse 58, wobei anhand von zwei zeitlich aufeinanderfolgenden Abtastungen $M_{n,l}$ und $M_{n,l-1}$ punktweise 6D-Geschwindigkeitsvektoren (3D Translation + 3D Rotation) der zuvor klassifizierten Segmente 24.1, 24.2, 24.3 ermittelt werden. Im Vergleich zur typischen Bestimmung des "Rigid Scene Flow" auf Basis der 3D Positionsdaten wie beispielsweise in

• Dewan, Ayush, et al. "Rigid scene flow for 3d lidar scans." 2016 IEEE/RSJ International Conference on Intelligent Robots and Systems (IROS). IEEE, 2016.

oder

• Liu, Xingyu, Charles R. Qi, and Leonidas J. Guibas. "Flownet3d: Learning scene flow in 3d point clouds." Proceedings of the IEEE Conference on Computer Vision and Pattern Recognition, 2019.

können die gemessenen Radialgeschwindigkeitswerte als weitere Information, beispielsweise als Randbedingungen, in die Berechnung aufgenommen werden. In einem Vergleichsschritt 60 erfolgt ein Vergleich der Bewegungsanalyse 58 mit a priori Informationen über erwartete Soll-Bewegungen der Segmente 24.1, 24.2., 24.3 des Roboterarms. Bei negativem Ergebnis des Vergleichs 60 (beispielswiese Bewegungsabweichung über ein vorgegebenes Toleranzmaß) wird eine sicherheitsgerichtete Aktion 62, beispielsweise ein Abschalten des Roboters 24 eingeleitet.

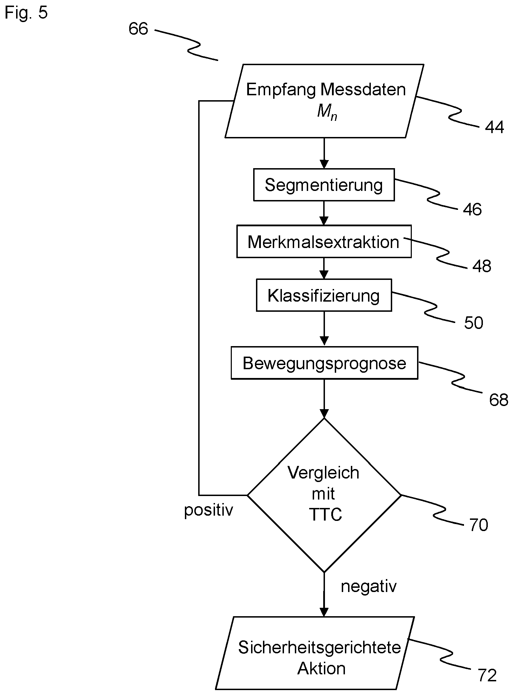

Figur 5 zeigt ein beispielhaftes Ablaufdiagramm 66 zur Vermeidung einer Kollision einer Person 22 und/oder deren Körperteile 22.1, 22.2, 22.3 mit einer Maschine 24, 26 unter Verwendung eines erfindungsgemäßen Verfahrens. Nach Empfang 44 der Messdaten $M_n$ erfolgen wie oben beschrieben die Schritte Segmentierung 46 der Messdaten, Merkmalsextraktion 48 und Klassifizierung 50, um Körperteile 22.1, 22.2, 22.3 der Person 22 und/oder die Person 22 selbst zu identifizieren. Im folgenden Schritt erfolgt eine Bewegungsprognose 68 der Körperteile 22.1, 22.2, 22.3 und/oder der Person 22 mittels eines Kalman-Filters. Im Vergleich zu beispielsweise aus der Radartechnik bekannten Implementierungen eines Kalman-Filters verbessert die höhere räumliche Auflösung eines FMCW-LiDARs deren Performanz. Aus den prognostizierten Bewegungen kann beispielsweise eine Time-To-Collision (TTC) als quantitatives Maß für die Kollisionsgefahr bestimmt werden 70 und bei einem negativen Vergleichsergebnis, beispielsweise einer Kollisionsgefahr, eine sicherheitsgerichtete Aktion 72, beispielsweise ein Warnsignal, ausgelöst werden.

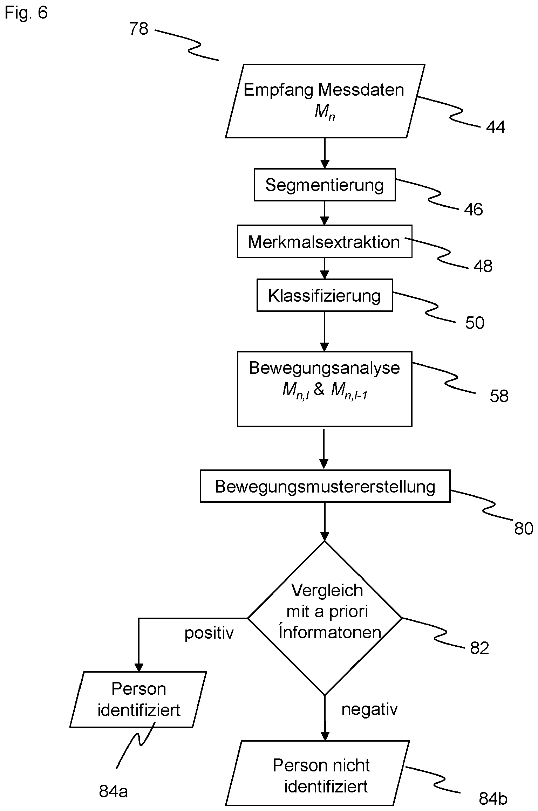

Figur 6 zeigt ein beispielhaftes Ablaufdiagramm 78 zur Personenidentifikation unter Verwendung eines erfindungsgemäßen Verfahrens. Nach Empfang 44 der Messdaten $M_n$ erfolgen wie oben beschrieben die Schritte Segmentierung 46 der Messdaten, Merkmalsextraktion 48 und Klassifizierung 50, um Körperteile 22.1, 22.2, 22.3 der Person 22 und/oder die Person 22 selbst zu identifizieren. Mit Algorithmen zur Berechnung des "Rigid Scene Flow" erfolgt eine Bewegungsanalyse 58, wobei anhand von zwei zeitlich aufeinanderfolgenden Abtastungen $M_{n,l}$ und $M_{n,l-1}$ punktweise 6D-Geschwindigkeitsvektoren (3D Translation + 3D Rotation) der Körperteile 22.1, 22.2, 22.3 und/oder der Person 22 ermittelt werden. Unter Verwendung von Ortskoordinaten, Intensitäten, Radialgeschwindigkeiten und 6D-Geschwindigkeitsvektoren der Körperteile 22.1, 22.2, 22.3 und/oder der Person 22 erfolgt im nächsten Schritt eine Bewegungsmustererstellung 80 für die Körperteile 22.1, 22.2, 22.3 und/oder die Person 22. In einem Vergleichsschritt 82 können die Bewegungsmuster mit a priori Informationen, beispielsweise vorab eingelernten Bewegungsmustern wie Gangbild oder Gesten der Person 22 verglichen werden und auf Basis des Vergleichs eine Ausgabe 84a, 84b über das Ergebnis des Vergleichsschritts 82 erfolgen. Aufgrund der hohen räumlichen Auflösung des FMCW-LiDAR-Sensors 12 können beispielsweise Mikrobewegungen des Brustkorbes als charakteristisches Merkmal einer Person 22 erfasst werden. Nach der Klassifikation des Brustkorbes einer oder mehrerer Personen 22 im Überwachungsbereich 16 kann beispielsweise mittels Spektralschätzung die Atemfrequenz als charakteristisches Merkmal einer Person 22 bestimmt und sowohl zur Identifikation als auch zur Vitalitätskontrolle verwendet werden.

**Patentansprüche**

1. Vorrichtung (10) zum Absichern eines Überwachungsbereiches (16) mit

   - wenigstens einem FMCW-LiDAR-Sensor (12) zum Aussenden von Sendelichtstrahlen (14, 14.1, 14.2, 14.3,14.n) in den Überwachungsbereich (16), zum Abtasten einer Vielzahl von Messpunkten (20, 20.1, 20.2, 20.3, 20.n) und zum Erzeugen von Messdaten (18) aus von den Messpunkten (20, 20.1, 20.2, 20.3, 20.n) remittiertem oder reflektiertem Sendelicht, sowie
   - einer Steuer- und Auswerteeinheit (32) zur Auswertung der Messdaten (18) und zur Erzeugung eines sicherheitsgerichteten Signals basierend auf der Auswertung, **dadurch gekenn-**

zeichnet,

**dass** die Messdaten (18) Radialgeschwindigkeiten ($v^r_n$) der Messpunkte (20, 20.1, 20.2, 20.3, 20.n) umfassen, und die Steuer- und Auswerteeinheit (32) dazu ausgebildet ist, die Messpunkte (20, 20.1, 20.2, 20.3, 20.n) unter Verwendung der Radialgeschwindigkeiten ($v^r_n$) der Messpunkte (20, 20.1, 20.2, 20.3, 20.n) zu segmentieren und zu Objekten (22, 24, 26, 28, 30) und/oder Objektsegmenten (22.1, 22.2, 22.3, 24.1, 24.2, 24.3) zusammenzufassen.

2. Vorrichtung nach Anspruch 1, wobei die Steuer- und Auswerteeinheit (32) dazu ausgebildet ist, Radialgeschwindigkeiten der Objekte (22, 24, 26, 28, 30) und/oder Objektsegmente (22.1, 22.2, 22.3, 24.1, 24.2, 24.3) zu bestimmen und Merkmale der Objekte (22, 24, 26, 28, 30) und/oder Objektsegmente unter Verwendung der Radialgeschwindigkeiten der Objekte (22, 24, 26, 28, 30) und/oder Objektsegmente (22.1, 22.2, 22.3, 24.1, 24.2, 24.3) zu extrahieren (48).

3. Vorrichtung nach Anspruch 2, wobei die Steuer- und Auswerteeinheit (32) dazu ausgebildet ist, die Objekte (22, 24, 26, 28, 30) und/oder Objektsegmente (22.1, 22.2, 22.3, 24.1, 24.2, 24.3) unter Verwendung der Radialgeschwindigkeiten der Objekte und/oder Objektsegmente (22.1, 22.2, 22.3, 24.1, 24.2, 24.3) zu klassifizieren (50).

4. Vorrichtung nach einem der Ansprüche 1 bis 3, wobei die Steuer- und Auswerteeinheit (32) dazu ausgebildet ist, die Messpunkte (20, 20.1, 20.2, 20.3, 20.n) unter Verwendung der Radialgeschwindigkeit ($v^r_n$) der Messpunkte (20, 20.1, 20.2, 20.3, 20.n) zu filtern.

5. Vorrichtung nach Anspruch 4, wobei die Steuer- und Auswerteeinheit (32) dazu ausgebildet ist, Messpunkte (20, 20.1, 20.2, 20.3, 20.n) mit einer Radialgeschwindigkeit ($v^r_n$) unter einem vorgegebenen Schwellenwert für die Auswertung zu verwerfen.

6. Vorrichtung nach einem der vorhergehenden Ansprüche, wobei der FMCW-LiDAR-Sensor (12) stationär ist.

7. Vorrichtung nach Anspruch 6, wobei die Vorrichtung wenigstens einen weiteren FMCW-LiDAR-Sensor mit einem weiteren Überwachungsbereich aufweist und sich der Überwachungsbereich (16) mit dem weiteren Überwachungsbereich zumindest teilweise überschneidet.

8. Vorrichtung nach einem der Ansprüche 1 bis 5, wobei der FMCW-LiDAR-Sensor (12) beweglich ist.

9. Vorrichtung nach Anspruch 8 wobei der FMCW-LiDAR-Sensor (12) auf einem Roboterarm (24.1, 24.2, 24.3) befestigt ist.

10. Vorrichtung nach Anspruch 8 wobei der FMCW-LiDAR-Sensor (12) auf einem fahrerlosen Transportfahrzeug (26) befestigt ist.

11. Verfahren zum Absichern eines Überwachungsbereiches (16) mit den Schritten:

- Aussenden von Sendelichtstrahlen (14, 14.1, 14.2, 14.3,14.n) in den Überwachungsbereich (16) mit wenigstens einem FMCW-LiDAR-Sensor (12),
- Abtasten einer Vielzahl von Messpunkten (20, 20.1, 20.2, 20.3, 20.n) im Überwachungsbereich (16),
- Erzeugen von Messdaten (18) aus von den Messpunkten 20, 20.1, 20.2, 20.3, 20.n) remittiertem oder reflektiertem Sendelicht
- Auswerten der Messdaten, sowie
- Erzeugen eines sicherheitsgerichteten Signals basierend auf der Auswertung, **dadurch gekennzeichnet,**

**dass** die Messdaten (18) Radialgeschwindigkeiten ($v^r_n$) der Messpunkte (20, 20.1, 20.2, 20.3, 20.n) umfassen, und die Messpunkte (20, 20.1, 20.2, 20.3, 20.n) unter Verwendung der Radialgeschwindigkeiten ($v^r_n$) der Messpunkte 20, 20.1, 20.2, 20.3, 20.n) segmentiert und zu Objekten (22, 24, 26, 28, 30) und/oder Objektsegmenten (22.1, 22.2, 22.3, 24.1, 24.2, 24.3) zusammengefasst werden.

12. Verfahren nach Anspruch 11 mit den weiteren Schritten:

- Bestimmen von Radialgeschwindigkeiten der Objekte (22, 24, 26, 28, 30) und/oder Objektsegmente (22.1, 22.2, 22.3, 24.1, 24.2, 24.3), und
- Extrahieren (48) von Merkmalen der Objekte (22, 24, 26, 28, 30) und/oder Objektsegmente (22.1, 22.2, 22.3, 24.1, 24.2, 24.3) unter Verwendung der Radialgeschwindigkeiten der Objekte (22, 24, 26, 28, 30) und/oder Objektsegmente (22.1, 22.2, 22.3, 24.1, 24.2, 24.3).

13. Verfahren nach Anspruch 12 mit dem weiteren Schritt:

- Klassifizieren (50) der Objekte (22, 24, 26, 28, 30) und/oder Objektsegmente (22.1, 22.2, 22.3, 24.1, 24.2, 24.3) unter Verwendung der Radialgeschwindigkeiten der Objekte (22, 24, 26, 28, 30) und/oder Objektsegmente (22.1, 22.2, 22.3, 24.1, 24.2, 24.3).

**14.** Verfahren nach einem der Ansprüche 11 bis 13, mit dem weiteren Schritt:

- Filtern der Messpunkte (20, 20.1, 20.2, 20.3, 20.n) unter Verwendung der Radialgeschwindigkeit ($v^r_n$) der Messpunkte (20, 20.1, 20.2, 20.3, 20.n).

**15.** Verfahren nach Anspruch 14, wobei Messpunkte (20, 20.1, 20.2, 20.3, 20.n) mit einer Radialgeschwindigkeit ($v^r_n$) unter einem vorgegebenen Schwellenwert für die Auswertung verworfen werden.

**Claims**

**1.** Device (10) for protecting a monitored area (16) having

- at least one FMCW-LiDAR sensor (12) for emitting transmitted light beams (14, 14.1, 14.2, 14.3, 14.n) into the monitored area (16), for scanning a multiplicity of measurement points (20, 20.1, 20.2, 20.3, 20.n) and for generating measurement data (18) from transmitted light emitted or reflected by the measurement points (20, 20.1, 20.2, 20.3, 20.n), and
- a control and evaluation unit (32) for evaluating the measurement data (18) and for generating a safety-oriented signal based on the evaluation,

**characterized in that**
the measurement data (18) comprise radial velocities ($v^r_n$) of the measurement points (20, 20.1, 20.2, 20.3, 20.n), and the control and evaluation unit (32) is configured to segment the measurement points (20, 20.1, 20.2, 20.3, 20.n) using the radial velocities ($v^r_n$) of the measurement points (20, 20.1, 20.2, 20.3, 20.n) and to combine them into objects (22, 24, 26, 28, 30) and/or object segments (22.1, 22.2, 22.3, 24.1, 24.2, 24.3).

**2.** Device according to claim 1, wherein the control and evaluation unit (32) is configured to determine radial velocities of the objects (22, 24, 26, 28, 30) and/or object segments (22.1, 22.2, 22.3, 24.1, 24.2, 24.3) and to extract features of the objects (22, 24, 26, 28, 30) and/or object segments using the radial velocities of the objects (22, 24, 26, 28, 30) and/or object segments (22.1, 22.2, 22.3, 24.1, 24.2, 24.3) (48).

**3.** Device according to claim 2, wherein the control and evaluation unit (32) is configured to classify (50) the objects (22, 24, 26, 28, 30) and/or object segments (22.1, 22.2, 22.3, 24.1, 24.2, 24.3) using the radial velocities of the objects and/or object segments (22.1, 22.2, 22.3, 24.1, 24.2, 24.3).

**4.** Device according to any one of claims 1 to 3, wherein the control and evaluation unit (32) is configured to filter the measurement points (20, 20.1, 20.2, 20.3, 20.n) using the radial velocity ($v^r_n$) of the measurement points (20, 20.1, 20.2, 20.3, 20.n).

**5.** Device according to claim 4, wherein the control and evaluation unit (32) is configured to reject measurement points (20, 20.1, 20.2, 20.3, 20.n) with a radial velocity ($v^r_n$) below a predetermined threshold value for evaluation.

**6.** Device according to any one of the preceding claims, wherein the FMCW-LiDAR-sensor (12) is stationary.

**7.** Device according to claim 6, wherein the device comprises at least one further FMCW-LiDAR-sensor having a further monitoring area and the monitoring area (16) at least partially overlaps with the further monitoring area.

**8.** Device according to any one of claims 1 to 5, wherein the FMCW-LiDAR-sensor (12) is movable.

**9.** Device according to claim 8, wherein the FMCW-LiDAR-sensor (12) is mounted on an arm of a robot (24.1, 24.2, 24.3).

**10.** Device according to claim 8, wherein the FMCW-LiDAR-sensor (12) is mounted on an unmanned transport vehicle (26).

**11.** Method for safeguarding a monitored area (16) having the steps:

- emitting transmitted light beams (14, 14.1, 14.2, 14.3, 14.n) into the monitored area (16) with at least one FMCW-LiDAR-sensor (12),
- scanning a multiplicity of measurement points (20, 20.1, 20.2, 20.3, 20.n) in the monitored area (16),
- generating measurement data (18) from transmitted light beams (14, 14.1, 14.2, 14.3, 14.n) remitted or reflected by the measurement points (20, 20.1, 20.2, 20.3, 20.n)
- evaluating the measurement data, and
- generating a safety-related signal based on the evaluation,

**characterized in that**
the measurement data (18) comprise radial velocities ($v^r_n$) of the measurement points (20, 20.1, 20.2, 20.3, 20.n), and the measurement points (20, 20.1, 20.2, 20.3, 20.n) are segmented and combined into objects (22, 24, 26, 28, 30) and/or object segments (22.1, 22.2, 22.3, 24.1, 24.2, 24.3) using the radial velocities ($v^r_n$) of the measurement points (20, 20.1, 20.2, 20.3, 20.n).

**12.** Method according to claim 11, further comprising the steps of:

> - determining radial velocities of the objects (22, 24, 26, 28, 30) and/or object segments (22.1, 22.2, 22.3, 24.1, 24.2, 24.3), and
> - extracting (48) features of the objects (22, 24, 26, 28, 30) and/or object segments (22.1, 22.2, 22.3, 24.1, 24.2, 24.3) using the radial velocities of the objects (22, 24, 26, 28, 30) and/or object segments (22.1, 22.2, 22.3, 24.1, 24.2, 24.3).

**13.** Method according to claim 12, further comprising the step of:

> - classifying (50) the objects (22, 24, 26, 28, 30) and/or object segments (22.1, 22.2, 22.3, 24.1, 24.2, 24.3) using the radial velocities of the objects (22, 24, 26, 28, 30) and/or object segments (22.1, 22.2, 22.3, 24.1, 24.2, 24.3).

**14.** Method according to any one of claims 11 to 13, further comprising the step of:

> - filtering the measurement points (20, 20.1, 20.2, 20.3, 20.n) using the radial velocity ($v^r_n$) of the measurement points (20, 20.1, 20.2, 20.3, 20.n).

**15.** Method according to claim 14, wherein measurement points (20, 20.1, 20.2, 20.3, 20.n) having a radial velocity ($v^r_n$) below a predetermined threshold are discarded for evaluation.

**Revendications**

**1.** Dispositif (10) pour la protection d'une zone surveillée (16) avec

> - au moins un capteur FMCW-LiDAR (12) pour l'émission de faisceaux lumineux (14, 14.1, 14.2, 14.3, 14.n) dans la zone surveillée (16), pour le balayage d'une pluralité de points de mesure (20, 20.1, 20.2, 20.3, 20.n) et pour générer des données de mesure (18) à partir de la lumière transmise, émise ou réfléchie par les points de mesure (20, 20.1, 20.2, 20.3, 20.n), et
> - une unité de commande et d'évaluation (32) pour évaluer les données de mesure (18) et pour générer un signal de sécurité base sur l'évaluation,

> **caractérisé en ce que**
> les données de mesure (18) comprennent des vitesses radiales ($v^r_n$) des points de mesure (20, 20.1, 20.2, 20.3, 20.n), et l'unité de commande et d'évaluation (32) est configurée pour segmenter les points de mesure (20, 20.1, 20.2, 20.3, 20.n) à l'aide des vitesses radiales ($v^r_n$) des points de mesure (20, 20.1, 20.2, 20.3, 20.n) et pour les réunir en objets (22, 24, 26, 28, 30) et/ou en segments d'objets (22.1, 22.2, 22.3, 24.1, 24.2, 24.3).

**2.** Dispositif selon la revendication 1, dans lequel l'unité de commande et d'évaluation (32) est configurée pour déterminer les vitesses radiales des objets (22, 24, 26, 28, 30) et/ou des segments d'objets (22.1, 22.2, 22.3, 24.1, 24.2, 24.3) et pour extraire (48) des caractéristiques des objets (22, 24, 26, 28, 30) et/ou des segments d'objets en utilisant les vitesses radiales des objets (22, 24, 26, 28, 30) et/ou des segments d'objets (22.1, 22.2, 22.3, 24.1, 24.2, 24.3).

**3.** Dispositif selon la revendication 2, dans lequel l'unité de commande et d'évaluation (32) est configurée pour classer (50) les objets (22, 24, 26, 28, 30) et/ou les segments d'objets (22.1, 22.2, 22.3, 24.1, 24.2, 24.3) en utilisant les vitesses radiales des objets et/ou des segments d'objets (22.1, 22.2, 22.3, 24.1, 24.2, 24.3).

**4.** Dispositif selon l'une des revendications 1 à 3, dans lequel l'unité de commande et d'évaluation (32) est configurée pour filtrer les points de mesure (20, 20.1, 20.2, 20.3, 20.n) en utilisant la vitesse radiale ($v^r_n$) des points de mesure (20, 20.1, 20.2, 20.3, 20.n).

**5.** Dispositif selon la revendication 4, dans lequel l'unité de commande et d'évaluation (32) est configurée pour rejeter des points de mesure (20, 20.1, 20.2, 20.3, 20.n) avec une vitesse radiale ($v^r_n$) inférieure à une valeur d'un seuil prédéterminée pour l'évaluation.

**6.** Dispositif selon l'une des revendications précédentes, dans lequel le capteur FMCW-LiDAR (12) est fixe.

**7.** Dispositif selon la revendication 6, dans lequel le dispositif comprend au moins un autre capteur FMCW-LiDAR ayant une autre zone de surveillance et la zone de surveillance (16) chevauche au moins partiellement l'autre zone de surveillance.

**8.** Dispositif selon l'une des revendications 1 à 5, dans lequel le capteur FMCW-LiDAR (12) est mobile.

**9.** Dispositif selon la revendication 8, dans lequel le capteur FMCW-LiDAR (12) est monté sur un bras d'un robot (24.1, 24.2, 24.3).

**10.** Dispositif selon la revendication 8, dans lequel le capteur FMCW-LiDAR (12) est monté sur un véhicule de transport autoguidé (26).

**11.** Procédé pour la protection d'une zone surveillée (16) comprenant les étapes suivantes:

> - émission de faisceaux lumineux (14, 14.1, 14.2, 14.3, 14.n) dans la zone surveillée (16) avec au moins un capteur FMCW-LiDAR (12),
> - balayage d'une pluralité de points de mesure (20, 20.1, 20.2, 20.3, 20.n) dans la zone surveillée (16),
> - générer des données de mesure (18) à partir de la lumière transmise, émise ou réfléchie par les points de mesure (20, 20.1, 20.2, 20.3, 20.n),
> - évaluer les données de mesure, et
> - pour générer un signal de sécurité base sur l'évaluation,
>
> **caractérisé en ce que**
> les données de mesure (18) comprennent des vitesses radiales ($v^r_n$) des points de mesure (20, 20.1, 20.2, 20.3, 20.n), et les points de mesure (20, 20.1, 20.2, 20.3, 20.n) sont segmentés et combinés en objets (22, 24, 26, 28, 30) et/ou segments d'objets (22.1, 22.2, 22.3, 24.1, 24.2, 24.3) en utilisant les vitesses radiales ($v^r_n$) des points de mesure (20, 20.1, 20.2, 20.3, 20.n).

**12.** Procédé selon la revendication 11, comprenant en outre les étapes suivantes:

> - déterminer les vitesses radiales des objets (22, 24, 26, 28, 30) et/ou des segments d'objets (22.1, 22.2, 22.3, 24.1, 24.2, 24.3), et
> - extraire (48) des caractéristiques des objets (22, 24, 26, 28, 30) et/ou des segments d'objets (22.1, 22.2, 22.3, 24.1, 24.2, 24.3) en utilisant les vitesses radiales des objets (22, 24, 26, 28, 30) et/ou des segments d'objets (22.1, 22.2, 22.3, 24.1, 24.2, 24.3).

**13.** Procédé selon la revendication 12, comprenant en outre l'étape suivant:

> - classer (50) les objets (22, 24, 26, 28, 30) et/ou les segments d'objets (22.1, 22.2, 22.3, 24.1, 24.2, 24.3) en utilisant les vitesses radiales des objets (22, 24, 26, 28, 30) et/ou des segments d'objets (22.1, 22.2, 22.3, 24.1, 24.2, 24.3).

**14.** Procédé selon l'une des revendications 11 à 13, comprenant en outre l'étape suivant:

> - filtrer les points de mesure (20, 20.1, 20.2, 20.3, 20.n) en utilisant la vitesse radiale ($v^r_n$) des points de mesure (20, 20.1, 20.2, 20.3, 20.n).

**15.** Procédé selon la revendication 14, dans lequel les points de mesure (20, 20.1, 20.2, 20.3, 20.n) ayant une vitesse radiale ($v^r_n$) inférieure à une valeur d'un seuil prédéterminée sont écartés pour l'évaluation.

Fig. 1

Messdaten $M_n$

Fig. 2

Fig. 3

Empfang Messdaten
$M_n$

44

Segmentierung

46

Merkmalsextraktion

48

Klassifizierung

50

Ausgabe zur
Weiterverarbeitung

52

Fig. 4

54

Empfang Messdaten
$M_n$ — 44

Segmentierung — 46

Merkmalsextraktion — 48

Klassifizierung — 50

Bestimmung
repräsentativer Größen von
Roboterarmsegmenten — 56

Bewegungsanalyse
$M_{n,l}$ & $M_{n,l-1}$ — 58

Vergleich
mit a priori
Informationen — 60

positiv

negativ

Sicherheitsgerichtete
Aktion — 62

Fig. 5

66

Empfang Messdaten
$M_n$ — 44

Segmentierung — 46

Merkmalsextraktion — 48

Klassifizierung — 50

Bewegungsprognose — 68

Vergleich
mit
TTC — 70

positiv

negativ

Sicherheitsgerichtete
Aktion — 72

Fig. 6

78

Empfang Messdaten
$M_n$ — 44

Segmentierung — 46

Merkmalsextraktion — 48

Klassifizierung — 50

Bewegungsanalyse
$M_{n,l}$ & $M_{n,l-1}$ — 58

Bewegungsmustererstellung — 80

Vergleich
mit a priori
Ínformatonen — 82

positiv

negativ

Person
identifiziert

84a

Person nicht
identifiziert — 84b

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102007007576 A1
- DE 19843602 A1
- US 9804576 B2
- DE 102006048163 B4
- US 2019317219 A
- DE 102018125736 A1

**In der Beschreibung aufgeführte Nicht-Patentliteratur**

- **PIERROTTET, D. ; AMZAJERDIAN, F. ; PETWAY, L. ; BARNES, B. ; LOCKARD, G. ; RUBIO, M.** Linear FMCW Laser Radar for Precision Range and Vector Velocity Measurements. *Linear FMCW Laser Radar for Precision Range and Vector Velocity Measurements. MRS Proceedings,* 2008, 1076
- Realization of Integrated Coherent LiDAR. **T. KIM.** Doktorarbeit. University of California, 2019
- **BOGOSLAVSKYI et al.** Fast Range Image-Based Segmentation of Sparse 3D Laser Scans for Online Operation. *2016 IEEE/RSJ International Conference on Intelligent Robots and Systems*
- **BEHLEY et al.** Laser-based segment classification using a mixture of bag-of-words. *2013 IEEE/RSJ International Conference on Intelligent Robots and Systems*
- **DOUILLARD et al.** On the segmentation of 3d lidar point clouds. *2011 IEEE International Conference on Robotics and Automation*
- **SPINELLO et al.** A Layered Approach to People Detection in 3D Range Data. *Proceedings of the Twenty-Fourth AAAI Conference on Artificial Intelligence, AAAI,* 2010
- Rigid scene flow for 3d lidar scans. **DEWAN, AYUSH et al.** 2016 IEEE/RSJ International Conference on Intelligent Robots and Systems (IROS). IEEE, 2016
- **LIU, XINGYU ; CHARLES R. QI ; LEONIDAS J. GUIBAS.** Flownet3d: Learning scene flow in 3d point clouds. *Proceedings of the IEEE Conference on Computer Vision and Pattern Recognition,* 2019